(19) **Europäisches Patentamt / European Patent Office / Office européen des brevets**

(11) **EP 2 408 231 A1**

(12) **EUROPEAN PATENT APPLICATION**
published in accordance with Art. 153(4) EPC

(43) Date of publication:
**18.01.2012 Bulletin 2012/03**

(21) Application number: **10750719.6**

(22) Date of filing: **03.03.2010**

(51) Int Cl.:
*H04W 28/18* (2009.01)  *H04B 7/04* (2006.01)
*H04J 99/00* (2009.01)  *H04L 1/00* (2006.01)
*H04W 16/28* (2009.01)

(86) International application number:
**PCT/JP2010/053401**

(87) International publication number:
**WO 2010/103965 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.03.2009 JP 2009054906**

(71) Applicant: **NTT DOCOMO, INC.**
**Chiyoda-ku**
**Tokyo 100-6150 (JP)**

(72) Inventors:
• **OKUBO, Naoto**
  **Tokyo 100-6150 (JP)**
• **ISHII, Hiroyuki**
  **Tokyo 100-6150 (JP)**
• **KISHIYAMA, Yoshihisa**
  **Tokyo 100-6150 (JP)**

(74) Representative: **HOFFMANN EITLE**
**Patent- und Rechtsanwälte**
**Arabellastraße 4**
**81925 München (DE)**

(54) **WIRELESS BASE STATION**

(57) A radio base station (eNB) is a radio base station that can simultaneously transmit a first downlink signal in which a transmission stream number is adaptively changed, and a second downlink signal in which a transmission stream number is fixed to 1, to a mobile station using an MIMO scheme, the radio base station including: a reception quality reception unit configured to receive information indicating reception quality of the first downlink signal transmitted by the mobile station; a reception quality adjustment unit configured to calculate an adjustment value of the information indicating the reception quality based on a stream number of the first downlink signal; and a processing unit configured to perform an adaptive modulation and demodulation process and a transmission power control process on the second downlink signal based on the calculated adjustment value.

FIG. 5

EP 2 408 231 A1

**Description**

### TECHNICAL FIELD

The present invention relates to a radio base station.

### BACKGROUND ART

In a mobile communication system of the LTE (Long Term Evolution) scheme defined in the 3GPP, a radio base station eNB is configured to be capable of performing link adaptation based on CQI (Channel Quality Indicator) fed back from a mobile station UE.

### SUMMARY OF THE INVENTION

### PROBLEMS TO BE SOLVED BY THE INVENTION

However, in the 3GPP, when the MIMO (Multiple Input Multiple Output) scheme is applied in the mobile communication system of the LTE scheme, how the link adaption is performed is not defined, and thus, there is a problem that the appropriate link adaptation cannot be performed.

Therefore, the present invention is intended to overcome the above-described problem. An object of the present invention is to provide a radio base station capable of performing an appropriate link adaptation when the MIMO scheme is applied.

### MEANS FOR SOLVING THE PROBLEM

A first aspect of the present invention is summarized as a radio base station that can simultaneously transmit a first downlink signal in which a transmission stream number is adaptively changed, and a second downlink signal in which a transmission stream number is fixed to 1, to a mobile station using an MIMO scheme, the radio base station including: a reception quality reception unit configured to receive information indicating reception quality of the first downlink signal transmitted by the mobile station; a reception quality adjustment unit configured to calculate an adjustment value of the information indicating the reception quality based on a stream number of the first downlink signal; and a processing unit configured to perform an adaptive modulation and demodulation process and a transmission power control process on the second downlink signal based on the calculated adjustment value.

### EFFECT OF THE INVENTION

As described above, according to the present invention, it is possible to provide a radio base station capable of performing an appropriate link adaptation when the MIMO scheme is applied.

### BRIEF DESCRIPTION OF THE DRAWINGS

[Fig. 1] Fig. 1 is a diagram explaining a mobile communication system according to a first embodiment of the present invention.
[Fig. 2] Fig. 2 is a functional block diagram of a radio base station according to the first embodiment of the present invention.
[Fig. 3] Fig. 3 is a diagram explaining CQI transmitted by a mobile station in the mobile communication system according to the first embodiment of the present invention.
[Fig. 4] Fig. 4 is a table explaining CQI transmitted by a mobile station in the mobile communication system according to the first embodiment of the present invention.
[Fig. 5] Fig. 5 is a diagram explaining the rank adaption control (Rank Adaptation) used in the mobile communication system according to the first embodiment of the present invention.
[Fig. 6] Fig. 6 is a table illustrating one example of a corresponding table managed by an adaptive modulation and demodulation processing unit of the radio base station according to the first embodiment of the present invention.
[Fig. 7] Fig. 7 is a flowchart explaining an operation of the radio base station according to the first embodiment of the present invention.

## BEST MODES FOR CARRYING OUT THE INVENTION

(Configuration of mobile communication system according to first embodiment of the present invention)

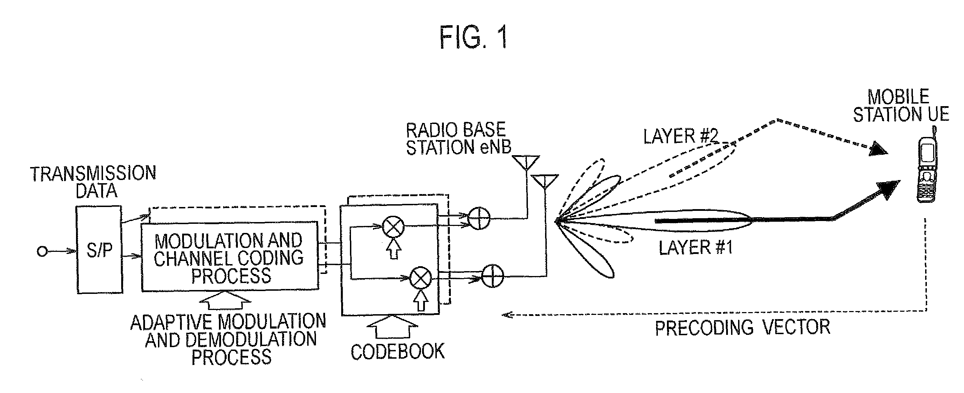

With reference to Fig. 1 to Fig. 6, the configuration of a mobile communication system according to a first embodiment of the present invention will be explained.

The mobile communication system according to this embodiment is a mobile communication system of the LTE scheme, and in the mobile communication system according to this embodiment, a radio base station eNB is configured to use the MIMO scheme so as to transmit a downlink signal to a mobile station UE, as illustrated in Fig. 1.

For example, in the mobile communication system, the radio base station eNB can simultaneously transmit a first downlink signal in which a transmission stream number is adaptively changed, and a second downlink signal in which a transmission stream number is fixed to 1, using the MIMO scheme.

In this case, the first downlink signal is a downlink data signal which is transmitted via a PDSCH (Physical Downlink Shared Channel) and to which dynamic scheduling is applied.

Further, the second downlink signal may be at least one of: a downlink control signal (a PDCCH signal) transmitted via a PDCCH (Physical Downlink Control Channel); a transmission acknowledgement signal (ACK/NACK, a PHICH signal) transmitted via a PHICH (Physical HARQ Indicator Channel); a control format signal (a PCFICH signal) transmitted via a PCFICH (Physical Control Format Indicator Channel); and a downlink data signal (an SPS-PDSCH signal) to which Semi-Persistent Scheduling (SPS) is applied and which is transmitted via a PDSCH (Physical Downlink Shared Channel).

Further, a "Downlink Reference Signal" for data demodulation and reception quality measurement is transmitted over the entire system bandwidth.

As the MIMO scheme, there are a "closed-loop MIMO scheme (Closed-loop MIMO)" and an "open-loop MIMO scheme (Open-loop MIMO)".

When the closed-loop MIMO scheme is applied, in the mobile communication system according to this embodiment, a common "set (codebook) of precoding vectors" is held between the mobile station UE and the radio base station eNB, and the mobile station UE is configured to select a precoding vector corresponding to the first downlink signal with the highest receiving characteristic and to feedback the precoding vector to the radio base station eNB.

Then, the radio base station eNB is configured to determine a transmission antenna weight, i.e., to form an optimal transmission beam, based on the preceding vector fed back by the mobile station UE.

Meanwhile, when the open-loop MIMO scheme is applied, in the mobile communication system according to this embodiment, the radio base station eNB is configured to use a fixed precoding vector when the number of transmission antennas is two, or to use a precoding vector periodically changed when the number of transmission antennas is four, and not to use the preceding vector fed back by the mobile station UE.

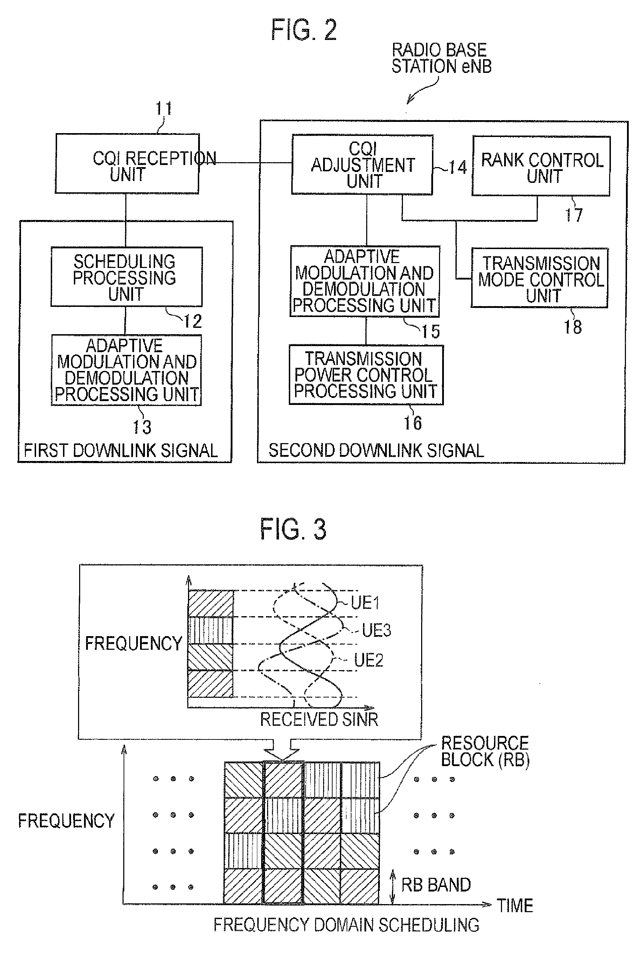

As illustrated in Fig. 2, the radio base station eNB according to this embodiment includes a CQI reception unit 11, a scheduling processing unit 12, an adaptive modulation and demodulation processing unit 13, a CQI adjustment unit 14, an adaptive modulation and demodulation processing unit 15, a transmission power control processing unit 16, a rank control unit 17, and a transmission mode control unit 18.

The CQI reception unit 11 is configured to receive the CQI (information indicating the reception quality of the first downlink signal) transmitted by the mobile station UE.

In this case, the mobile station UE is configured to measure the reception quality (e.g., SIR (Signal to Interference Ratio)) of the first downlink signal in a downlink using the "downlink reference signal", and to transmit the CQI that is information indicating the measured reception quality to the radio base station eNB via a PUCCH (Physical Uplink Control Channel).

It is noted that the mobile station UE may be configured to multiplex the above-mentioned CQI to the PUSCH, and to transmit the multiplexed CQI to the radio base station eNB at a sub-frame at which an uplink data signal (PUSCH, UL-SCH as a transport channel) is transmitted.

It is noted that, as the CQI, two types of a "wideband CQI" and a "subband CQI" are known.

The "wideband CQI" is information indicating a reception quality measured in the entire system bandwidth, and the "subband CQI" is information indicating a reception quality measured in each subband obtained by dividing the system bandwidth as illustrated in Fig. 3.

As illustrated in Fig. 3, when the "subband CQI" is used, the radio base station eNB can transmit the downlink signal using a resource block of a frequency band with a good reception state in the mobile station UE.

It is noted that, the SPS-PDSCH signal, which basically is a signal transmitted by using the same resource block in each transmission cycle, is configured not to be subject to scheduling in the frequency band, and to be mapped over the entire system band, and thus, it is preferable to perform link adaptation based on the "wideband CQI".

Further, in the same manner, since the PDCCH signal, the PHICH signal, and the PCFICH signal are configured to be mapped over the entire system bandwidth, in order to obtain a frequency diversity effect, it is preferable to perform the link adaptation based on the "wideband CQI".

Further, basically, the mobile station UE is configured to transmit the "wideband CQI" to the radio base station eNB in all transmission modes. In addition to the "wideband CQI", the mobile station UE may be configured to transmit the "subband CQT" to the radio base station eNB.

Further, the mobile station UE is configured to calculate the CQI in each codeword.

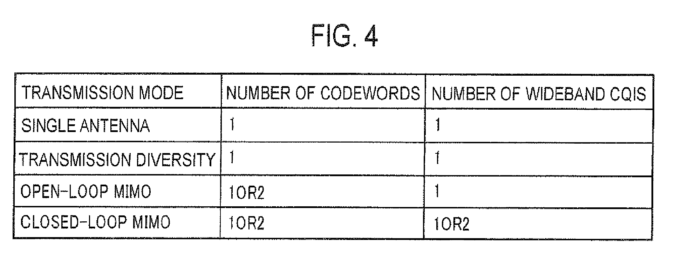

In this case, the codeword indicates a codeword (TB: Transport Block) transmitted at one sub-frame (TTI: Transmission Time Interval), and the number of codewords varies according to the transmission mode of the first downlink signal (e. g. , the PDSCH signal) as illustrated in Fig. 4.

As illustrated in Fig. 4, when the transmission mode of the first Downlink signal is a "single antenna" and "transmission diversity", the number of codewords is "1" and the number of "wideband CQIs" to be transmitted is "1".

Further, when the transmission mode of the first downlink signal is an "Open-loop MIMO, the number of codewords is "1" or "2" and the number of "wideband CQIs" to be transmitted is "1".

Moreover, when the transmission mode of the first downlink signal is a "Closed-loop MIMO", the number of codewords is "1" or "2" and the number of "wideband CQI" to be transmitted is "1" or "2".

It is noted that when the transmission mode of the first downlink signal is the "Open-loop MIMO" or the "Closed-loop MIMO", the number of codewords which can be transmitted by the mobile station UE changes based on the reception state (e.g., pathloss or a received SINR) of the first downlink signal in the mobile station UE.

Further, when the transmission mode of the first downlink signal is the "Open-loop MIMO", even if the number of codewords is "2", the number of "wideband CQIs" to be transmitted is "1" from the standpoint of overhead reduction.

Hereinafter, in the present embodiment, since the "wideband CQI" is used as the CQI, the CQI indicates the "wideband CQI" unless otherwise specified.

The transmission mode control unit 18 is configured to control the transmission mode of the first downlink signal (e.g., the PDSCH signal) which is to be applied in the radio base station eNB.

The rank control unit 17 is configured to determine a rank to be applied to the first downlink signal based on RI (Rank Indicator) notified by the mobile station UE.

In this case, the rank is a value indicating the stream number of the first downlink signal to be simultaneously transmitted using the MIMO scheme.

The mobile station UE is configured to adaptively control an optimal rank based on a propagation path state (a received SINR, antenna fading correlation and the like) in a downlink.

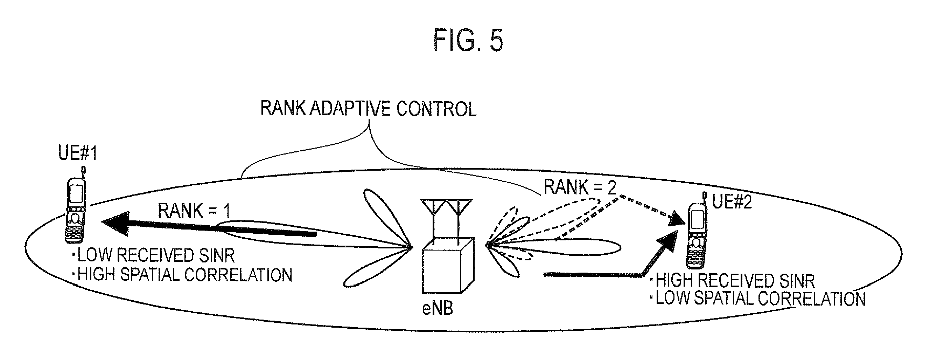

For example, as illustrated in Fig. 5, when mobile station UE#2 is positioned near the center of a cell, spatial correlation is low and the reception quality (e.g., pathloss or a received SINR) of the first downlink signal in the mobile station UE#2 is high, a rank is set to "2" (SDM (Spatial Division Multiplexing) is used) that is, the number of codewords is set to "2", so that it is possible to realize a high transmission speed.

Meanwhile, as illustrated in Fig. 5, when the mobile station Uu#1 is positioned near the edge of the cell, spatial correlation is high and the reception quality (e.g., pathloss or a received SINR) of the first downlink signal in the mobile station UE#1 is low, the rank is set to "1" (transmission diversity is used), that is, the number of codewords is set to "1", so that it is possible to improve the reception quality of the first downlink signal in the mobile station UE#1 and expand a cover area.

In this case, when the number of transmission antennas is two and the rank has been changed in the mobile communication system employing the MIMO scheme, the property and number of CQIs transmitted by the mobile station UE are changed. The CQI transmitted by the mobile station UE will be explained, below.

Firstly, when the rank is "1" (i.e., the number of codewords is "1"), the CQI transmitted by the mobile station UE will be explained.

In such a case, the CQI is measured for one codeword and corresponds to SIR including a transmission diversity gain.

In this case, when the transmission mode of the first downlink signal is the "Open-loop MIMO", since SFBC (Space-frequency Block Coding) is applied, the above-mentioned SIR ideally corresponds to maximum ratio combining of a propagation path frequency response.

Further, when the transmission mode of the first downlink signal is the "Closed-loop MIMO, since an optimal precoding vector is selected, the above-mentioned SIR is high as compared with the SIR when the transmission mode of the first downlink signal is the "Open-loop MIMO".

Secondly, when the rank is "2" (i.e., the number of codewords is "2"), the CQI transmitted by the mobile station UE will be explained.

In such a case, the CQI is measured for each codeword. In this case, since each codeword is affected by interference, it is expected that SIR of this case is reduced beyond the influence caused by a simple reduction to the half of received power, as compared with the SIR when the rank is "1".

It is noted that, when the transmission mode of the first downlink signal is the "Closed-loop MIMO", since an optimal preceding vector is selected, it is expected that the degree of degradation of the SIR is low as compared with the case in which the transmission mode of the first downlink signal is the "Open-loop MIMO".

As described above, when the MIMO scheme is applied, the CQI significantly depends on the stream number (the rank) of the first downlink signal to be simultaneously transmitted, as well as an actual state of a propagation path.

On the other hand, since transmission diversity (SFBC) is always applied to the second downlink signal (e.g., the downlink control signal) regardless of the transmission mode of the first downlink signal, because of the above-described rank, it is probable that the SIR of the first downlink signal (e. g., the PDSCH signal) and the SIR of the second downlink signal are significantly different from each other.

That is, when the rank is "1", since the transmission diversity is applied to both the first downlink signal and the second downlink signal, the difference between the SIR of the first downlink signal and the SIR of the second downlink signal is not noticeable.

On the other hand, when the rank is "2", since spatial division multiplexing with the number "2" of codewords (the stream number) is applied to the first downlink signal, the SIR of the first downlink signal is smaller than the SIR of the second downlink signal.

Therefore, when the rank is "2", if the radio base station eNB performs link adaptation (e.g., a scheduling process, an adaptive modulation and demodulation process, and a transmission power control process) with respect to the second downlink signal (e.g., the downlink control signal) based on the CQI of the first downlink signal, the following problems may occur.

A first problem would be that transmission power of the second downlink signal (e.g., the downlink control signal) becomes more than necessary as a result of a transmission power control process based on the CQI, because the CQI reported by the mobile station UE indicates a value smaller than the reception quality of the second downlink signal, which is actually measured by the mobile station UE.

Further, a second problem would be that if a coding rate (e.g., an aggregation level) of the second downlink signal (e. g. , the PDCCH signal) is determined based on the CQI, then downlink resources may be wasteful, because the CQI reported by the mobile station UE indicates a value smaller than the reception quality of the second downlink signal, which is actually measured by the mobile station UE.

In this case, the "aggregation level" indicates the number of CCEs (Control Channel Elements) continuously assigned to the PDCCH signal based on the CQI reported by the mobile station UE.

Further, each control channel element includes nine continuous REGs (Resource Element Groups). Further, each resource element group includes four continuous REs (Resource Elements). Moreover, the resource element is configured by one OFDM symbol (time direction) and one sub-carrier (frequency direction).

In consideration of the above points, the CQI adjustment unit 14 is configured to calculate a CQI adjustment value based on the rank (the stream number of the first downlink signal simultaneously transmitted) determined by the rank control unit 17.

For example, when the rank determined by the rank control unit 17 is "2", the CQI adjustment unit 14 may be configured to select a larger one of two CQIs received in the CQI reception unit 11 as the CQI adjustment value.

Specifically, if the CQI adjustment value is set as "$CQI_{adjust}$" and the above-mentioned two CQIs are set as "$CQI_{wideband.1}$" and "$CQI_{wideband.2}$", the CQI adjustment value "$CQI_{adjust}$" is expressed by Equation "$CQI_{adjust}=max(CQI_{windeband.1},CQI_{wideband.2})$". In this case, max (A,B) is a function returning a larger value of A and B.

Further, when the rank determined by the rank control unit 17 is "2", the CQI adjustment unit 14 may be configured to select a smaller one of the two CQIs received in the CQI reception unit 11 as the CQI adjustment value. Specifically, if the CQI adjustment value is set as "$CQI_{adjust}$" and the two CQIs are set as "$CQI_{wideband.1}$" and "$CQI_{wideband.2}$", the CQI" adjustment value "$CQI_{adjust}$" is expressed by Equation "$CQI_{adjust} = min(CQI_{wideband.1}, CQI_{wideband.2})$". In this case, min(A,B) is a function returning a smaller value of A and B.

Further, when the rank determined by the rank control unit 17 is "2", the CQI adjustment unit 14 may be configured to calculate the CQI adjustment value by summing up the two CQIs received in the CQI reception unit 11.

It is noted that the CQI adjustment unit 14 may sum up the two CQIs as a dB value or a true value.

That is, since the CQI is an index obtained by quantizing SIR (a dB value) measured by the mobile station UE, the dimension of the unit of the CQI corresponds to the dB value.

Therefore, if the CQI adjustment value is set as "$CQI_{adjust}$" and the two CQIs are set as "$CQI_{wideband.1}$" and "$CQI_{wideband.2}$" the CQI adjustment unit 14 can sum up the two CQIs as a true value by (Equation 1) below.

[Equation 1]

$$CQI_{adjust} = 10\log 10\left(10^{\frac{CQIwideband,1}{10}} + 10^{\frac{CQIwideband,2}{10}}\right)$$

It is noted that if the CQI adjustment value is set as "$CQI_{adjust}$" and the two CQIs are set as "$CQI_{wideband.1}$" and "$CQI_{wideband.2}$", the CQI adjustment unit 14 can sum up the two CQIs as the dB value by Equation "$CQI_{adjust} = CQI_{wideband.1} + CQI_{wideband.2}$".

Further, when the rank determined by the rank control unit 17 is "2", the CQI adjustment unit 14 maybe configured to calculate the CQI adjustment value by adding a predetermined offset value to an average value of the two CQIs received in the CQI reception unit 11.

It is noted that, the CQI adjustment unit 14 may calculate the average value of the CQIs as the dB value or the true value.

Specifically, if the CQI adjustment value is set as "$CQI_{adjust}$" and the two CQIs are set as "$CQI_{wideband.1}$" and "$CQI_{wideband.2}$", the CQI adjustment unit 14 can calculate the average value of the two CQIs as the true value by (Equation 2) below.

[Equation 2]

$$CQI_{adjust} = 10\log 10\left(\frac{10^{\frac{CQIwideband,1}{10}} + 10^{\frac{CQIwideband,2}{10}}}{2}\right)$$

It is noted that, if the CQI adjustment value is set as "$CQI_{adjust}$" and the two CQIs are set as "$CQI_{wideband.1}$" and "$CQI_{wideband.2}$", the CQI adjustment unit 14 can average the two CQIs as the dB value by Equation "$CQI_{adjust} = (CQI_{wideband.1} + CQI_{wideband.2})/2$".

Further, when the rank determined by the rank control unit 17 is "2", the CQI adjustment unit 14 may be configured to calculate the CQI adjustment value by adding a predetermined offset value to one (either larger or smaller value) of the CQIs received in the CQI reception unit 11.

Specifically, if the CQI adjustment value is set as "$CQI_{adjust}$" and the two CQIs are set as "$CQI_{wideband.1}$" and "$CQI_{wideband.2}$", the CQI adjustment value "$CQI_{adjust}$" is expressed by Equation "$CQI_{adjust} = max(CQI_{wideband.1}, CQI_{wideband.2}) + CQI_{diff}$" or Equation "$CQI_{adjust} = min(CQI_{wideband.1}, CQI_{wideband.2}) + CQI_{diff}$". In this case, the $CQI_{diff}$ corresponds to the predetermined offset value.

Further, when the rank determined by the rank control unit 17 is "2", the CQI adjustment unit 14 maybe configured to calculate the CQI adjustment value by adding a predetermined offset value to the sum of the two CQIs received in the CQI reception unit 11.

Specifically, if the CQI adjustment value is set as "$CQI_{adjust}$" and the two CQIs are set as "$CQI_{wideband.1}$" and "$CQI_{wideband.2}$", the CQI adjustment value "$CQI_{adjust}$" is expressed by the following Equation 3.

[Equation 3]

$$CQI_{adjust} = 10\log 10\left(10^{\frac{CQIwideband,1}{10}} + 10^{\frac{CQIwideband,2}{10}}\right) + CQI_{diff}$$

In this case, the $CQI_{diff}$ corresponds to the predetermined offset value.

In this case, the CQI adjustment unit 14 may calculate the sum of the two CQIs as the dB value. In such a case, the CQI adjustment value "$CQI_{adjust}$" is expressed by Equation "$CQI_{adjust} = (CQI_{wideband.1} + CQI_{wideband.2}) + CQI_{diff}$".

Further, when the rank determined by the rank control unit 17 is "2", the CQI adjustment unit 14 may be configured to calculate the CQI adjustment value by adding a predetermined offset value to the average value of the two CQIs received in the CQI reception unit 11.

Specifically, if the CQI adjustment value is set as "$CQI_{adjust}$" and the two CQIs are set as "$CQI_{wideband.1}$" and "$CQI_{wideband.2}$", the CQI adjustment value "$CQI_{adjust}$" is expressed by the following Equation 4.

[Equation 4]

$$CQI_{adjust} = 10\log 10 \left( \frac{10^{\frac{CQI_{wideband,1}}{10}} + 10^{\frac{CQI_{wideband,2}}{10}}}{2} \right) + CQI_{diff}$$

In this case, the $CQI_{diff}$ corresponds to the predetermined offset value.

In this case, the CQI adjustment unit 14 may calculate the average value of the two CQIs as the dB value. In such a case, the CQI adjustment value "$CQI_{adjust}$" is expressed by Equation "$CQI_{adjust} = (CQI_{wideband.1} + CQI_{wideband.2}) /2 + CQI_{diff}$".

It is noted that, when the rank determined by the rank control unit 17 is "1", the CQI adjustment unit 14 may use the CQI received in the CQI reception unit 11 as the CQI adjustment value.

The scheduling processing unit 12 is configured to perform a scheduling process on the first downlink signal (e.g. , the PDSCH signal) based on one CQI or a plurality of CQIs received in the CQI reception unit 11.

The adaptive modulation and demodulation processing unit 13 is configured to perform an adaptive modulation and demodulation process on the first downlink signal (e.g., THE PDSCH signal), based on one CQI or a plurality of CQIs received in the CQI reception unit 11.

Specifically, the adaptive modulation and demodulation processing unit 13 is configured to determine a coding rate and the like to be applied to the first downlink signal, based on one CQI or a plurality of CQIs receive in the CQI reception unit 11.

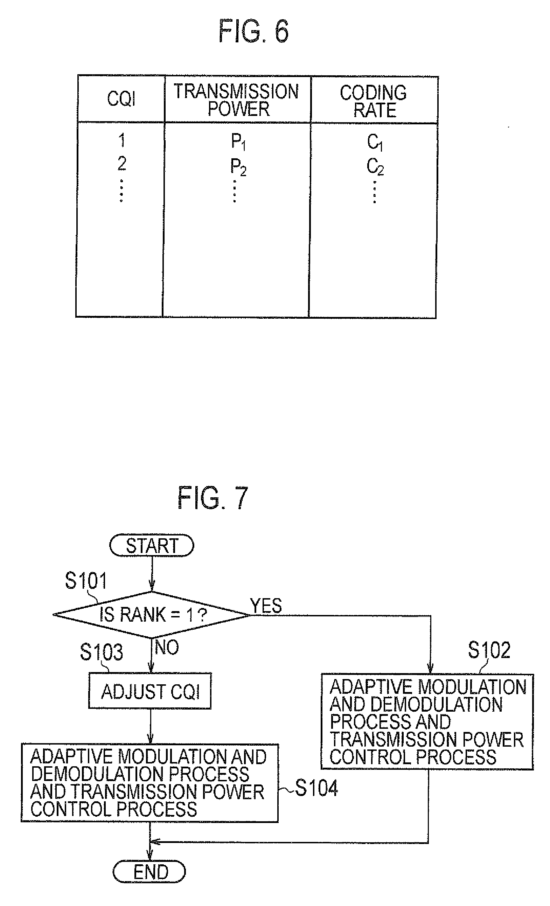

In this case, the adaptive modulation and demodulation processing unit 13 may be configured to determine a coding rate, which corresponds to one CQI or a plurality of CQIs received in the CQI reception unit 11, as a coding rate to be applied to the first downlink signal with reference to the corresponding table illustrated in Fig. 6.

The adaptive modulation and demodulation processing unit 15 is configured to determine a coding rate and the like to be applied to the second downlink signal, based on the CQI adjustment value calculated by the CQI adjustment unit 14.

Specifically, the adaptive modulation and demodulation processing unit 15 is configured to determine a coding rate and the like to be applied to the second downlink signal, based on the CQI adjustment value calculated by the CQI adjustment unit 14.

For example, the adaptive modulation and demodulation processing unit 15 may be configured to determine a coding rate, which corresponds to the CQI adjustment value calculated by the CQI adjustment unit 14, as a coding rate to be applied to the second downlink signal, with reference to the corresponding table illustrated in Fig. 6.

In this case, the corresponding table referred to by the adaptive modulation and demodulation processing unit 13 and the corresponding table referred to by the adaptive modulation and demodulation processing unit 15 may be equal to or different from each other.

The transmission power control processing unit 16 is configured to determine the transmission power of the second downlink signal, based on the CQI adjustment value calculated by the CQI adjustment unit 14.

For example, the transmission power control processing unit 16 may be configured to determine transmission power, which corresponds to the CQI adjustment value calculated by the CQI adjustment unit 14, as the transmission power of the second downlink signal, with reference to the corresponding table illustrated in Fig. 6.

(Operation of the mobile communication system according to the first embodiment of the present invention)

With reference to Fig. 7, the operation of the mobile communication system according to this embodiment, specifically, an operation of the radio base station eNB according to this embodiment, will be explained.

As illustrated in Fig. 7, in step S101, the radio base station eNB determines whether or not a rank to be applied to the first downlink signal is "1".

When the rank is "1", in step S102, the radio base station eNB performs an adaptive modulation and demodulation process and a transmission power control process on the second downlink signal, based on CQI received from the mobile station UE.

Meanwhile, when the rank has a value other than "1", the radio base station eNB adjusts the CQI received from the mobile station UE in step S103, and performs an adaptive modulation and demodulation process and a transmission power control process on the second downlink signal based on the adjusted CQI in step S104.

So far, in the above-mentioned embodiment, the case in which the rank determined by the rank control unit 17 is "2" has been explained. However, the present invention is not limited thereto. For example, the present invention can also be applied to the case in which the rank determined by the rank control unit 17 has a value equal to or larger than "2".

Further, in the above-mentioned embodiment, the case in which the "wideband CQI" is used as CQI has been explained. However, the present invention is not limited thereto. For example, the present invention can also be applied to the case in which the "subband CQI" is used as CQI.

(Operation and effect of the mobile communication system according to the first embodiment of the present invention)

In accordance with the mobile communication system according to the first embodiment of the present invention, in the case in which the MIMO scheme is applied, even if a rank to be applied to the first downlink signal has a value other than "1", it is possible to appropriately perform an adaptive modulation and demodulation process and a transmission power control process on the second downlink signal by adjusting CQI reported from the mobile station UE.

The above-mentioned aspects of the embodiment may be expressed as follow:

A first aspect of this embodiment is summarized as a radio base station eNB capable of simultaneously transmitting a first downlink signal in which a transmission stream number is adaptively changed, and a second downlink signal, in which a transmission stream number is fixed to 1, to a mobile station UE using an MIMO scheme, including: a CQI reception unit 11 configured to receive CQI (information indicating a reception quality of the first downlink signal) transmitted by the mobile station UE, a CQI adjustment unit 14 configured to calculate a CQI adjustment value based on a rank (the stream number of the first downlink signal simultaneously transmitted), an adaptive modulation and demodulation processing unit 15 and a transmission power control unit 16 configured to perform an adaptive modulation and demodulation process and a transmission power control process on the second downlink signal based on the calculated adjustment value.

In the first aspect of this embodiment, when the rank has a value equal to or larger than "2" (when the stream number of the first downlink signal simultaneously transmitted is plural), the CQI adjustment unit 14 may be configured to select any one of the largest CQI and the smallest CQI among received CQIs as the CQI adjustment value.

In the first aspect of this embodiment, when the rank has a value equal to or larger than "2", the CQI adjustment unit 14 may be configured to calculate the CQI adjustment value by summing up received CQIs.

In the first aspect of this embodiment, when the rank has a value equal to or larger than "2", the CQI adjustment unit 14 may be configured to calculate the CQI adjustment value by averaging the received CQIs.

In the first aspect of this embodiment, when the rank has a value equal to or larger than "2", the CQI adjustment unit 14 may be configured to calculate the CQI adjustment value by adding a predetermined offset value to any one of the received CQIs.

In the first aspect of this embodiment, when the rank has a value equal to or larger than "2", the CQI adjustment unit 14 may be configured to calculate the CQI adjustment value by adding a predetermined offset value to the sum of the received CQIs.

In the first aspect of this embodiment, when the rank has a value equal to or larger than "2", the CQI" adjustment unit 14 may be configured to calculate the CQI adjustment value by adding a predetermined offset value to the average value of the received CQIs.

In the first aspect of this embodiment, the first downlink signal is a downlink data signal to which dynamic scheduling is applied and which is transmitted via PDSCH (Physical Downlink Shared Channel).

In the first aspect of this embodiment, the second downlink signal may be at least one of a downlink control signal transmitted via PDCCH (physical downlink control channel), a transmission acknowledgement signal transmitted via PHICH (physical HARQ indicator channel), a control format signal transmitted via PCFICH (physical control format indicator channel), and a downlink data signal to which Semi-Persistent Scheduling is applied and which is transmitted via PDSCH (physical downlink shared channel).

Note that operation of the above described radio base station eNB and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station eNB and the mobile station UE. Also, the storage medium and the processor may be provided in the radio base station eNB and the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

**Claims**

1.  A radio base station that can simultaneously transmit a first downlink signal in which a transmission stream number is adaptively changed, and a second downlink signal in which a transmission stream number is fixed to 1, to a mobile station using an MIMO scheme, the radio base station comprising:

    a reception quality reception unit configured to receive information indicating reception quality of the first downlink signal transmitted by the mobile station;
    a reception quality adjustment unit configured to calculate an adjustment value of the information indicating the reception quality based on a stream number of the first downlink signal; and
    a processing unit configured to perform an adaptive modulation and demodulation process and a transmission power control process on the second downlink signal based on the calculated adjustment value.

2.  The radio base station according to claim 1, wherein
    when the stream number of the first downlink signal is plural, the reception quality adjustment unit is configured to select any one of a largest one and a smallest one of the received information indicating the reception quality as the adjustment value.

3.  The radio base station according to claim 1, wherein
    when the stream number of the first downlink signal is plural, the reception quality adjustment unit is configured to calculate the adjustment value by summing up the received information indicating the reception quality.

4.  The radio base station according to claim 1, wherein
    when the stream number of the first downlink signal is plural, the reception quality adjustment unit is configured to calculate the adjustment value by averaging the received information indicating the reception quality.

5.  The radio base station according to claim 1, wherein
    when the stream number of the first downlink signal is plural, the reception quality adjustment unit is configured to calculate the adjustment value by adding a predetermined offset value to any one of the received information indicating the reception quality.

6.  The radio base station according to claim 1, wherein
    when the stream number of the first downlink signal is plural, the reception quality adjustment unit is configured to calculate the adjustment value by adding a predetermined offset value to a sum of the received information indicating the reception quality.

7.  The radio base station according to claim 1, wherein
    when the stream number of the first downlink signal is plural, the reception quality adjustment unit is configured to calculate the adjustment value by adding a predetermined offset value to an average value of the received information indicating the reception quality.

8.  The radio base station according to any one of claims 1 to 7, wherein
    the first downlink signal is a downlink reference signal transmitted over an entire system bandwidth via a physical downlink shared channel.

9.  The radio base station according to any one of claims 1 to 8, wherein
    the second downlink signal includes at least one of a downlink control signal transmitted via a physical downlink control channel, a transmission acknowledgement signal transmitted via a physical HARQ indicator channel, a

**EP 2 408 231 A1**

control format signal transmitted via a physical control format indicator channel, and a downlink data signal to which seme-persistent scheduling is applied and which is transmitted via a physical downlink shared channel.

**10**

FIG. 1

## FIG. 2

RADIO BASE
STATION eNB

11

CQI RECEPTION
UNIT

CQI
ADJUSTMENT
UNIT ~14

RANK CONTROL
UNIT

17

SCHEDULING
PROCESSING
UNIT

~12

ADAPTIVE
MODULATION AND
DEMODULATION
PROCESSING UNIT

~13

FIRST DOWNLINK SIGNAL

ADAPTIVE
MODULATION AND
DEMODULATION
PROCESSING UNIT

15

TRANSMISSION
MODE CONTROL
UNIT

18

TRANSMISSION
POWER CONTROL
PROCESSING UNIT

16

SECOND DOWNLINK SIGNAL

## FIG. 3

FREQUENCY

UE1
UE3
UE2

RECEIVED SINR

RESOURCE
BLOCK (RB)

FREQUENCY

RB BAND

TIME

FREQUENCY DOMAIN SCHEDULING

## FIG. 4

| TRANSMISSION MODE | NUMBER OF CODEWORDS | NUMBER OF WIDEBAND CQIS |
|---|---|---|
| SINGLE ANTENNA | 1 | 1 |
| TRANSMISSION DIVERSITY | 1 | 1 |
| OPEN-LOOP MIMO | 1OR2 | 1 |
| CLOSED-LOOP MIMO | 1OR2 | 1OR2 |

# FIG. 5

RANK ADAPTIVE CONTROL

UE#1

RANK = 1

RANK = 2

UE#2

·LOW RECEIVED SINR
·HIGH SPATIAL CORRELATION

eNB

·HIGH RECEIVED SINR
·LOW SPATIAL CORRELATION

## FIG. 6

| CQI | TRANSMISSION POWER | CODING RATE |
|-----|--------------------|-------------|
| 1 | $P_1$ | $C_1$ |
| 2 | $P_2$ | $C_2$ |
| ⋮ | ⋮ | ⋮ |

## FIG. 7

START

S101

IS RANK = 1?  —YES→

NO

S103

ADJUST CQI

S102

ADAPTIVE MODULATION AND DEMODULATION PROCESS AND TRANSMISSION POWER CONTROL PROCESS

ADAPTIVE MODULATION AND DEMODULATION PROCESS AND TRANSMISSION POWER CONTROL PROCESS —S104

END

<div align="center">

**INTERNATIONAL SEARCH REPORT**

</div>

| | International application No. |
|---|---|
| | PCT/JP2010/053401 |

A. CLASSIFICATION OF SUBJECT MATTER
*H04W28/18*(2009.01)i, *H04B7/04*(2006.01)i, *H04J99/00*(2009.01)i, *H04L1/00*
(2006.01)i, *H04W16/28*(2009.01)i

According to International Patent Classification (IPC) or to both national classification and IPC

B. FIELDS SEARCHED

Minimum documentation searched (classification system followed by classification symbols)
H04W4/00-99/00, H04B7/04, H04J99/00, H04L1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2009/022599 A1 (NTT Docomo Inc.),<br>19 February 2009 (19.02.2009),<br>entire text; all drawings<br>& EP 2180620 A1 | 1-9 |
| A | WO 2008/023646 A1 (NTT Docomo Inc.),<br>28 February 2008 (28.02.2008),<br>entire text; all drawings<br>& JP 2008-79262 A     & KR 10-2009-0042949 A<br>& EP 2056506 A1     & CN 101529738 A<br>& US 2010/0046445 A1 | 1-9 |
| A | WO 2007/088624 A1 (Fujitsu Ltd.),<br>09 August 2007 (09.08.2007),<br>entire text; all drawings<br>& EP 1981198 A1     & US 2008/0318606 A1<br>& CN 101336524 A | 1-9 |

| ☒ Further documents are listed in the continuation of Box C. | ☐ See patent family annex. |
|---|---|

| * Special categories of cited documents: | "T" later document published after the international filing date or priority |
|---|---|
| "A" document defining the general state of the art which is not considered to be of particular relevance | date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 May, 2010 (18.05.10) | 01 June, 2010 (01.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/053401 |

C (Continuation).    DOCUMENTS CONSIDERED TO BE RELEVANT

| Category* | Citation of document, with indication, where appropriate, of the relevant passages | Relevant to claim No. |
|---|---|---|
| P,A | WO 2009/044685 A1  (NTT Docomo Inc.),<br>09 April 2009 (09.04.2009),<br>entire text; all drawings<br>& JP 2009-89191 A        & EP 2182764 A1 | 1-9 |

Form PCT/ISA/210 (continuation of second sheet) (July 2009)